# DEMANDE DE BREVET EUROPEEN

(11) **EP 1 491 705 A1**
(43) Date de publication de la demande: **29.12.2004**
(21) Numéro de dépôt: 04291585.0
(22) Date de dépôt: 23.06.2004
(51) Int. Cl.: E05B 65/20, F16B 37/08

(54) **Attache-tringle de portière de véhicule automobile**

(30) Priorité: 23.06.2003 FR 0307544
(71) Demandeur: Gobin Daude, 94380 Bonneuil-sur-Marne (FR)
(72) Inventeur: Kurtz, Dominique, 91620 Nozay (FR); Lemesre, Frédéric, 77200 Torcy (FR)
(74) Mandataire: Texier, Christian

(57) **Abrégé**

L'invention concerne un attache-tringle formant organe intermédiaire entre une poignée d'actionnement et une serrure de portière de véhicule automobile, l'attache-tringle comprenant un élément de fermeture (200) refermable sur la tringle ainsi que des moyens (215) bloquant cet élément (200) à l'encontre de sa fermeture, ces moyens de blocage étant prévus pour être désactivés par un déplacement de ceux-ci, caractérisé en ce que ces moyens de blocage déplaçables (215) sont constitués par une partie de l'élément de fermeture lui-même, de sorte que le déplacement de déblocage est un déplacement appliqué sur l'élément de fermeture (200) lui-même.

## Description

L'invention concerne les attache-tringles formant liaison intermédiaire entre une poignée d'actionnement et une serrure de portière de véhicule automobile.

De nombreuses variantes d'attache-tringles ont été proposées à ce jour. On mentionnera ainsi les attache-tringles mono-pièce, typiquement à simple clipsage de tringle, les attache-tringles à verrouillage par coulissement d'un tiroir autour de la tringle, et encore les attache-tringles à verrouillage par basculement d'un couvercle sur la tringle.

L'ensemble des dispositifs proposés jusqu'à présent s'est avéré encore trop fastidieux dans leur implantation sur la chaîne de production. Ces attache-tringles sont notamment l'objet de contretemps fâcheux car ils arrivent fréquemment au poste de montage en situation accidentellement verrouillée. Il est alors non seulement nécessaire de les déverrouiller avant mise en place, mais de plus cette situation anormale peut ne pas être détecté, aboutissant au final à une portière habillée dans laquelle la tringle n'est pas attachée.

On a certes déjà proposé des aménagements formant barrière vis à vis d'un organe de verrouillage de la tringle, un tel aménagement-barrière est désactivé par une intervention spéciale de l'opérateur. Il s'agit donc de déplacer l'aménagement barrière pour autoriser le déplacement de l'aménagement de verrouillage. On rencontre alors un accroissement inacceptable du nombre de manipulations nécessaires.

L'invention vise à résoudre les deux inconvénients précités.

L'invention vise donc un attache-tringle qui ne soit pas sujet à une fermeture accidentelle, et dont la mise en place reste particulièrement simple.

Ces buts sont atteints selon l'invention grâce à un attache-tringle formant organe intermédiaire entre une poignée d'actionnement et une serrure de portière de véhicule automobile, l'attache-tringle comprenant un élément de fermeture refermable sur la tringle ainsi que des moyens bloquant cet élément à l'encontre de sa fermeture, ces moyens de blocage étant prévus pour être désactivés par un déplacement de ceux-ci, caractérisé en ce que ces moyens de blocage déplaçables sont constitués par une partie de l'élément de fermeture lui-même, de sorte que le déplacement de déblocage est un déplacement appliqué sur l'élément de fermeture lui-même.

D'autres caractéristiques, buts et avantages de l'invention apparaîtront à la lecture de la description détaillée qui va suivre, faite en référence aux figures annexées sur lesquelles :
- la figure 1 représente un attache-tringle selon l'invention, en perspective et en position ouverte ;
- la figure 2 représente le même attache-tringle, selon une perspective différente et en position fermée ;
- la figure 3 représente l'attache-tringle en perspective arrière, en position ouverte.
- la figure 4 représente l'attache-tringle lorsqu'il est refermé sur un tringle ;

L'attache-tringle décrit ci-après est un attache-tringle à deux pièces, l'une formant socle 100 et l'autre fermoir 200.

Le fonctionnement global de cet attache-tringle repose sur le positionnement final d'une tringle enfermée sous le fermoir 200 et au dessus de la partie supérieure du socle 100.

Le fermoir (ou couvercle) coopère pour cela avec la partie supérieure du socle 100 grâce à deux portions d'arbres 210 extrémales engagées chacune dans un passage circulaire 130 du socle formant à chaque fois palier de rotation. Ces portions d'arbre 210 se présentent sous la forme de deux pions en saillie aux extrémités opposées du couvercle matérialisant donc les extrémités d'un arbre de rotation,

Le socle 100 se prolonge quant à lui de manière habituelle, par un téton inférieur 110 prévu pour coopérer avec un équipement de serrure.

Le socle 100 présente, en face supérieure, un espace 120 réservé à la réception de la tringle et du fermoir 200.

La partie supérieure du socle présente la forme générale d'un caisson, dont un plateau de fond rectangulaire 102 qui solidarise les différents organes du socle.

Ce plateau de fond 102 porte d'abord, en face inférieure, le téton 110 de fixation à la serrure. Il s'étend en outre, en partie supérieure, sous forme d'élévations constituant des parois latérales et bordant ainsi le volume de réception du fermoir et de la tringle.

Parmi ces élévations de parois, celles 103 et 104 situées aux côtés les plus courts du plateau de fond sont symétriques l'une à l'autre. Elle sont d'une épaisseur suffisante pour assurer le maintien du couvercle et de la tringle.

Plus précisément, les parois 103 et 104 sont chacune scindées en deux demi-parois.

Ainsi, à chaque extrémité longitudinale du plateau de fond, le socle 100 présente une première demi-paroi incluant un passage circulaire formant palier, et une seconde demi-paroi formant, par son bord adjacent à la première demi paroi, un bord de retenue pour la tringle. sur les figures, les premières demi-parois sont référencées 103a et 104a tandis que les secondes demi-parois sont référencées 103b et 104b.

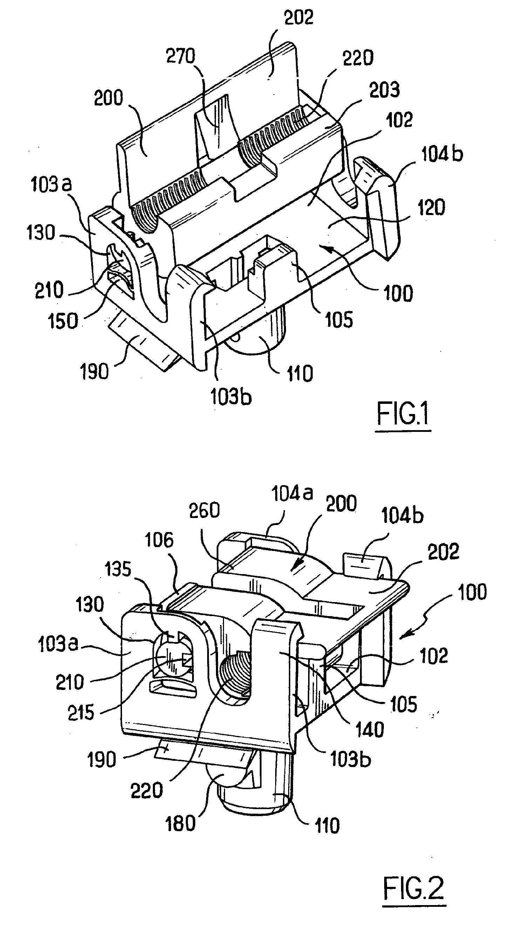

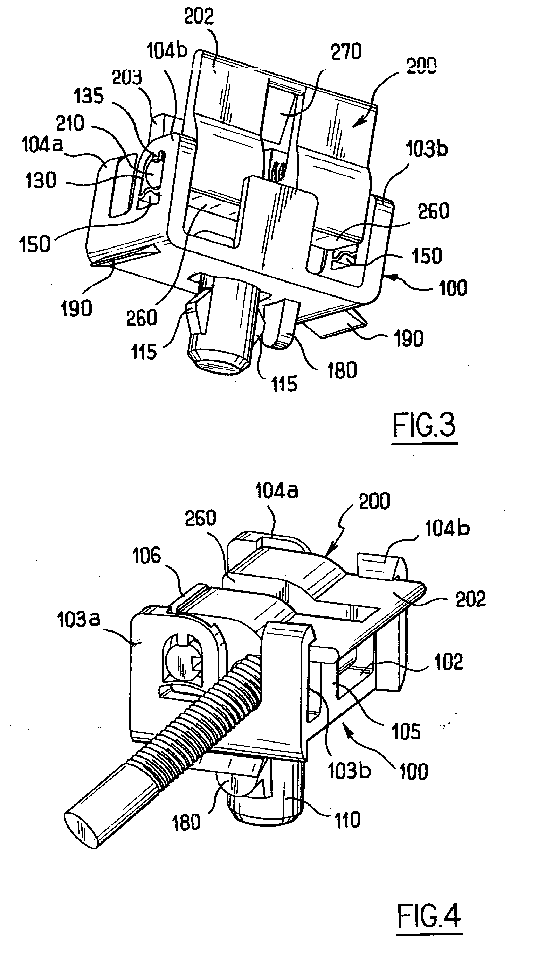

Ainsi, en situation fermée (figures 2 et 4), la tringle passe aux extrémités du socle 100, à chaque fois entre les deux demi-parois qui encadrent la tringle.

Chacune des premières demi-parois 103a et 104a s'étend, à son extrémité supérieure, sous la forme d'un ergot de retenue franchissant le fermoir 200, élastique en écartement grâce à la flexibilité du matériau constituant le socle.

Les bordures longitudinales du plateau de fond 102 du socle 100 portent, elles aussi, des élévations verticales. Ces élévations sont toutefois limitées à une portion seulement de la bordure considérée.

Ainsi, une élévation frontale 105 vient s'étendre, comme on le décrira par la suite, à proximité de l'extrémité libre du fermoir 200, tandis qu'une élévation opposée 106 vient border le fermoir 200 dans sa partie voisine de son axe géométrique de rotation.

Le fermoir 200 forme lui aussi un plateau supérieur rectangulaire, référencé 202, de dimensions similaires à celle du plateau de fond 102 du socle.

Une bordure longitudinale de ce plateau supérieur 202, celle située au voisinage son axe géométrique de rotation, se prolonge sous la forne d'une paroi 203 qui se relève pour former, en section transversale, une forme de U.

Cette partie de paroi 203 en U remplira le rôle de gorge de réception pour la tringle comme on le décrira par la suite.

Afin d'éviter que le fermoir 200 ne soit fermé sans la volonté d'un opérateur, le présent attache-tringle est équipé de moyens interdisant l'entraînement du fermoir en l'absence d'une manipulation spéciale.

Sur la figure 2, l'un des pions d'extrémités 210 formant axe du fermoir présente une rupture de sa périphérie qui constitue une cavité 215 latérale du pion.

De manière correspondante, le passage 130 formant palier du socle présente une extension en saillie 135 vers l'intérieur du palier.

Dans la position fermée de la figure 2, cette extension 135 et cette cavité 215 sont décalées l'une de l'autre d'un quart de tour, l'extension 135 du palier étant en appui sur la bordure courante du pion d'articulation 210.

Si cette extension 135 glisse effectivement sur le pion d'articulation pour une partie du pivotement du fermoir 200, on notera qu'en position ouverte du fermoir, l'extension 135 se trouve en regard de la cavité lalérale 215 du pion 210.

Grâce à un élément de rappel élastique 150 repoussant le pion d'articulation 210 vers le haut 135, l'extension 135 s'engage alors automatiquement dans la cavité latérale 215 du pion, par un léger mouvement vers le haut de l'ensemble du fermoir.

Dans cette situation représentée aux figures 1 et 3, le fermoir 200 se trouve alors bloqué en pivotement, et ce dans une situation particulièrement avantageuse où un effort de simple pivotement sur le fermoir ne suffit pas à désengager les moyens de blocage précédemment exposés.

En d'autres termes, par l'action de la lame de rappel inférieure 150, un désengagement de ces moyens de blocage ne peut se produire de manière naturelle.

Il faut en effet imposer au fermoir un mouvement vers le bas, seul capable d'autoriser le pivotement. On notera que la lame de rappel 150 est une lame venue de matière avec le socle, et sous laquelle est ménagé un espace libre pour une flexion de cette dernière vers le bas.

Le positionnement d'un moyen de blocage engageant le fermoir lui-même, et orienté de manière adéquate pour que son désengagement ne soit pas confondu avec le pivotement, exige donc une séquence de deux mouvements différents pour la fermeture de ce dernier.

L'ensemble obtenu grâce à ces moyens s'avère particulièrement avantageux, puisque sécurisé contre une fermeture inappropriée de l'attache-tringle mais ne présentant aucune sûreté à manipulation complexe. En effet, le déblocage du fermoir 200 s'effectue par manipulation de ce dernier lui-même.

Le fermoir 200 n'est déblocable que par un mouvement préliminaire distinct du pivotement, de sorte que la séquence de ces deux mouvements distincts (de déblocage puis de pivotement) ne peut prendre place que par la volonté d'un utilisateur.

On notera que le présent attache-tringle est en outre prévu pour une première étape de mise en place de la tringle qui s'effectue d'abord au sein du fermoir 200 plutôt qu'au sein du socle.

En effet, le fermoir 200 présente une gorge 220 de réception de tringle qui est ouverte vers le dessus de l'attache-tringle.

La tringle est positionnée dans cette gorge par déplacement de la tringle en direction du socle.

Une telle mise en place initiale dans le fermoir par déplacement de la tringle dans une direction correspondant à celle de déblocage du fermoir favorise un déblocage aisé du fermoir.

En effet, le mouvement naturel de l'opérateur consistant à appuyer la tringle dans le fond de cette gorge de réception 220 produit le déplacement du fermoir qui est requis pour son déblocage. En d'autres termes, l'opérateur n'a qu'a placer la tringle avec une légère pression en fond de gorge pour pouvoir pivoter le fermoir, séquence de manipulations qui reste improbable en l'absence de tringle.

Outre les avantages exposés ci-dessus, on notera l'avantage à utiliser un tel blocage de fermeture dans le cadre particulier d'un attache-tringle à couvercle pivotant.

En effet, le maintien d'un couvercle en position bloquée ouverte génère un encombrement qui s'avère interdire à un opérateur d'habiller la portière. Ainsi, au cas où la tringle aurait été laissée inconsciemment hors de l'attache-tringle, la suite des opérations de montage s'en trouve interdite.

Selon un avantage particulier de la présente variante, on adopte des moyens de freinage en basculement du fermoir.

Ainsi, on renforce encore la sûreté contre une fermeture non souhaitée.

Grâce aux moyens de freinage en basculement, le deuxième effort appliqué sur le fermoir doit surmonter ce freinage, ce qui tend à bien scinder les deux directions d'efforts successifs nécessaires au basculement.

Ces moyens de freinage renforcent donc la sécurité contre une fermeture intempestive du fermoir.

Ces moyens de freinage sont ici un couple bossage 260/langue d'appui 106 mettant en oeuvre une légère résistance à franchir lors du basculement du couvercle. La langue élastique 106 est verticale et venue de matière avec le socle 100, le bossage 260 étant lui constitué par une arête arrondie à l'opposé de l'extrémité libre du fermoir 200.

D'autres aménagements avantageux sont adoptés dans la présente variante.

Ainsi, le fermoir 200 est muni d'un élément d'accroche à retour élastique 270 apte à maintenir la tringle dans le fond de la gorge de réception 220. Cet élément 270 assure que la tringle ne sort pas de son logement au cours du pivotement du fermoir. Il assure également que la tringle ainsi maintenue ne subit aucun décalage longitudinal dans la gorge. Un tel décalage pourrait en effet se produire au cours de la fermeture malgré les stries transversales ménagées en fond de gorge pour la retenue du filetage de la tige.

Le socle 100 présente également une extension 105 venant approcher la face inférieure du fermoir en position fermée, venant alors remplir le rôle de maintien ferme de la tringle en poussée contre le fond de gorge, cette fois de manière encore plus robuste que l'élément d'accroche 270. La tringle est alors prise en étau entre cette extension 105 et le fond de gorge strié.

On notera qu'en manoeuvrant les demi-parois 103b et 104b, on libère le couvercle et celui-ci peut être ouvert pour extraire la tringle.

Le démontage sans destruction de pièce est donc également un avantage dans le cadre du présent mode de réalisation.

On notera en outre qu'en partie inférieure, le socle 100 est muni d'une extension 180 limitant le déplacement angulaire, située latéralement au pion d'ancrage 110.

La partie inférieure du socle 100 est également munie d'éléments de jupe 190 s'étendant diagonalement vers le bas et fléchissant légèrement vers le haut lorsque le pion d'ancrage est engagé avec la serrure.

Ces éléments de jupe 190 suppriment, par leur déformation élastique, les jeux entre l'attache-tringle et la serrure.

On notera en outre des extensions latérales 115 du pion d'ancrage 110 aptes à coopérer avec des moyens correspondant de la serrure pour empêcher l'extraction du pion d'ancrage.

Enfin, on notera que les pions d'articulation 210 du fermoir sont biseautés selon une pente d'effacement dirigée vers le bas dans la position ouverte du fermoir. On notera aussi que les parois matérialisant les paliers 130 du socle présentent eux-aussi une réservation d'effacement en extrémité supérieure. Ces aménagements permettent un montage aisé du fermoir sur le socle par simple glissement des pentes précitées.

L'attache-tringle ici présenté est particulièrement adapté pour les serrures susceptibles d'actionnements forts de l'utilisateur. En effet, la structure de cet attache-tringle le rend particulièrement robuste aux efforts d'utilisation.

## Revendications

1. Attache-tringle formant organe intermédiaire entre une poignée d'actionnement et une serrure de portière de véhicule automobile, l'attache-tringle comprenant un élément de fermeture (200) refermable sur la tringle ainsi que des moyens (215) bloquant cet élément (200) à l'encontre de sa fermeture, ces moyens de blocage étant prévus pour être désactivés par un déplacement de ceux-ci, **caractérisé en ce que** ces moyens de blocage déplaçables (215) sont constitués par une partie de l'élément de fermeture lui-même, de sorte que le déplacement de déblocage est un déplacement appliqué sur l'élément de fermeture (200) lui-même.

2. Attache tringle selon la revendication 1, **caractérisé en ce que** l'élément de fermeture (200) est un élément à basculement.

3. Attache-tringle selon la revendication 2, **caractérisé en ce que** les moyens de blocage (215) sont positionnés pour se débloquer par un mouvement de l'élément de fermeture (200) selon une direction transversale à celle de son basculement.

4. Attache-tringle selon la revendication précédente, **caractérisé en ce qu'**il comprend des moyens de rappel (150) s'opposant audit mouvement de déblocage de l'élément de fermeture (200).

5. Attache-tringle selon l'une quelconque des revendications 2 à 4, **caractérisé en ce qu'**il comprend une portion d'arbre de pivotement (210) et un palier (130) correspondant pour assurer le basculement de fermeture, l'attache-tringle présentant des moyens de blocage (215, 135) qui sont constitués par une cavité (215) et un téton (135) appartenant l'un à la portion d'arbre de pivotement et l'autre au palier (130).

6. Attache-tringle selon la revendication 4, et la revendication 5 en combinaison, **caractérisé en ce** l'élément de rappel (150) est placé en appui latéral sur la portion d'axe de pivotement (210) et produit un rappel de celle-ci dans une direction d'engagement mutuel du téton (135) et de la cavité (215), de sorte que l'élément de fermeture (200) ne puisse être basculé qu'après avoir subi un déplacement transversal à son axe de basculement.

7. Attache-tringle selon l'une quelconque des revendications précédentes, **caractérisé en ce que** l'élément de fermeture (200) est un élément basculant et comporte une gorge (220) de réception de la tringle.

8. Attache-tringle selon la revendication précédente, **caractérisé en ce que** la gorge (220) de réception de la tringle est une gorge qui est ouverte dans une direction opposée à la direction du mouvement de déblocage de l'élément de fermeture (200) de sorte qu'une pression de la tringle dans le fond de la gorge (220) a pour effet de débloquer l'élément de fermeture (200).

9. Attache-tringle selon la revendication 7 ou la revendication 8, **caractérisé en ce qu'**il comprend des organes de clipsage (270) de la tringle dans le fond de la gorge (220).

10. Attache-tringle selon l'une quelconque des revendications précédentes, **caractérisé en ce qu'**il comporte des moyens (106, 260) de freinage en basculement de l'élément de fermeture (200).
